# EUROPEAN PATENT APPLICATION

(11) **EP 4 693 777 A1**
(43) Date of publication of application: **11.02.2026**
(21) Application number: 24193387.8
(22) Date of filing: 07.08.2024
(51) Int. Cl.: H02G 3/04, G02B 6/44, H02G 3/22

(54) **TRANSMISSION CABLE OUTLET DEVICE**

(71) Applicant: Dunne, Donal Joseph, R95 Y880 Castlecomer County Kilkenny (IE)
(72) Inventor: Dunne, Donal Joseph, R95 Y880 Castlecomer County Kilkenny (IE)
(74) Representative: Schütte, Gearoid

(57) **Abstract**

A transmission cable outlet device (1) comprises a sleeve (2) having an outer end (3) for engagement with a conduit of a trunking assembly. An inner end (4) of the sleeve (2) terminates in an enlarged hollow end portion (5) comprising an intermediate funnel portion (6) and an outer cylindrical housing (7). An open end of the cylindrical housing (7) is closed and sealed by a removable end plate (8). A number of spaced-apart glands (9) are mounted on the end plate (8) for reception and through passage of cables (10). Each gland (9) is mounted on an inside face (23) of the end plate (8). Thus, advantageously, all of the glands (9) are housed within the enlarged hollow end portion (5) of the transmission cable outlet device (1) in use.

## Description

### Introduction

This invention relates to a transmission cable outlet device for use in a trunking assembly.

### Background of the Invention

A trunking assembly for transmission cables is described in GB 2351333A, which includes a transmission cable outlet device comprising a sleeve communicating with an enlarged end portion which terminates in an end plate. A number of glands are mounted on the end plate to grip and hold cables so as to provide a clean take-off from the trunking. It will be noted that the glands project outwardly from an outer face of the end plate and each gland has an irregular and very uneven outer surface which readily collects dust and makes it difficult to properly and fully clean the glands, which is often required on a regular basis.

The term "cable" as used herein includes electrical cables, fibre optic cables, air lines, fluid lines and the like conduits and pipework.

It is an object of the present invention to provide an improved transmission cable outlet device which addresses problems associated with existing transmission cable outlet devices.

### Summary of the Invention

According to the invention, there is provided a transmission cable outlet device for use in a trunking assembly for transmission cables, comprising a sleeve having an outer end for engagement with a conduit of the trunking assembly, the sleeve having an inner end terminating in an enlarged hollow end portion having an open end closed and sealed by a removable end plate, at least one gland mounted on the end plate for reception and through passage of a cable, characterised in that the or each gland is mounted on an inside face of the end plate such that the or each gland is housed within the enlarged hollow end portion when the end plate is engaged with the open end of the enlarged hollow end portion. Advantageously the glands are housed within the device providing the device with a smoother exterior which is less prone to collecting dust and is much easier and quicker to properly clean in use.

In another embodiment, at least one cable through-passage location is indicated at an outer face of the end plate.

In another embodiment, the cable through-passage location is indicated by a mark or indentation in the outer face of the end plate.

In another embodiment, the cable through-passage location is indicated by a through-hole extending through the end plate.

In another embodiment, a bore of the through-hole corresponds to a standard cable outer diameter.

In another embodiment, at least one cable guide insert is mounted on the end plate, the cable guide insert comprising a tubular sleeve with a flanged end, the sleeve being demountably engagable within a complementary opening in the end plate.

In another embodiment, an annular recess is provided in the end plate for reception of the flanged end of the cable guide insert.

In another embodiment, a bore of the sleeve is threaded for reception of a gland.

In another embodiment, a cable through-passage location is centrally indicated at an outer face of the flanged end of the cable guide insert.

In another embodiment, the cable through-passage location is indicated by a mark or indentation in the outer face of the flanged end of the cable guide insert.

In another embodiment, the cable through-passage location is indicated by a through-hole extending centrally through the flanged end of the cable guide insert.

In another embodiment, a bore of the through-hole corresponds to a standard cable outer diameter.

### Brief Description of the Drawings

The invention will be more clearly understood by the following description of some embodiments thereof, given by way of example only, with reference to the accompanying drawings, in which:
Fig. 1 is an exploded perspective view of a transmission cable outlet device according to the invention;
Fig. 2 is a sectional perspective view of the transmission cable outlet device of the invention, shown in use;
Fig. 3 is a detail perspective view showing an end plate portion of the transmission cable outlet device, shown in use with cables mounted thereon;
Fig. 4 is an elevational view of the end plate forming portion of the transmission cable outlet device;
Fig. 5 is an exploded perspective view of another transmission cable outlet device according to a second embodiment of the invention;
Fig. 6 is a sectional perspective view of the transmission cable outlet device shown in Fig. 5, shown in use;
Fig. 7 is a detail perspective view showing an end plate portion of the transmission cable outlet device of Fig. 5, shown in use with cables mounted thereon;
Fig. 8 is an elevational view of the end plate forming portion of the transmission cable outlet device of Fig. 5;
Fig. 9 is a detail sectional elevational view of a cable guide insert forming portion of the transmission cable outlet device of Fig. 5; and
Fig. 10 is an end elevational view of the cable guide insert shown in Fig. 9.

### Detailed Description of the Preferred Embodiments

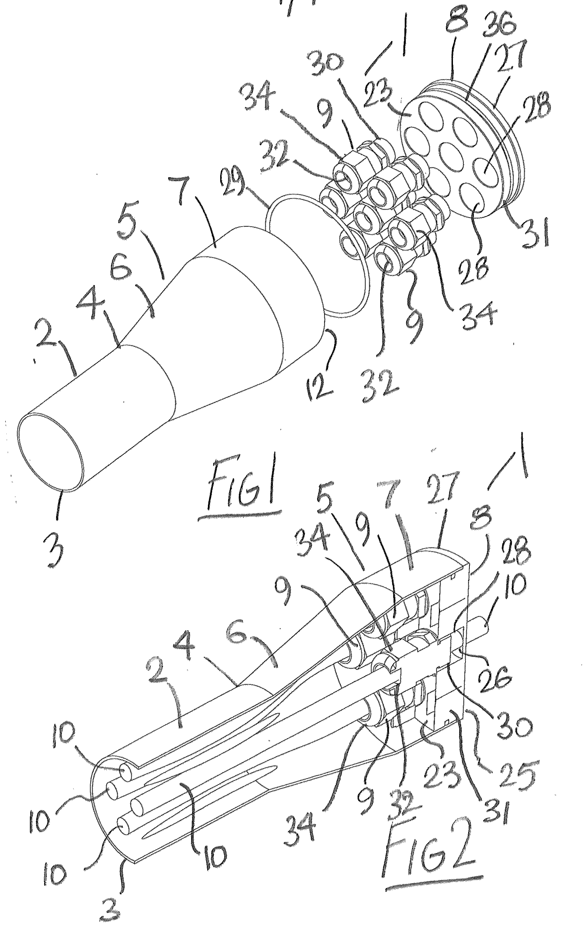

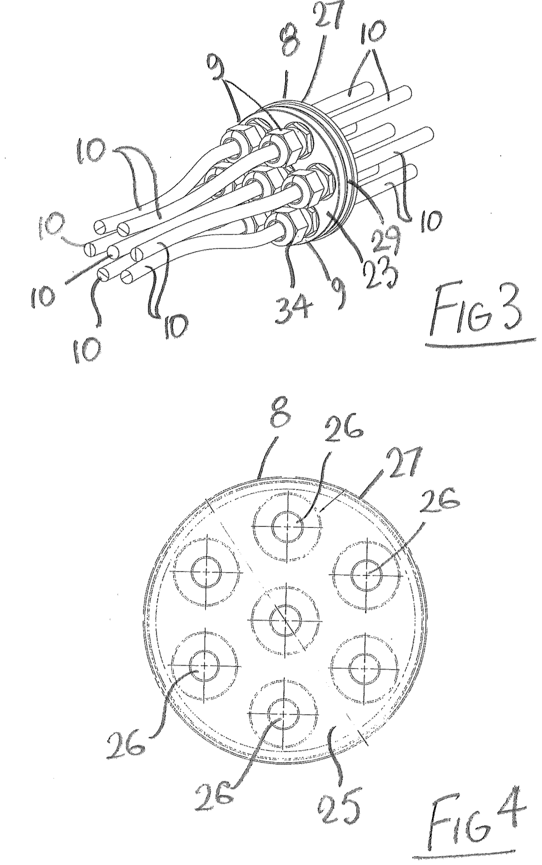

Referring to the drawings and initially to Fig. 1 to Fig. 4 thereof, there is shown a transmission cable outlet device according to the invention, indicated generally by the reference numeral 1. The transmission cable outlet device 1 comprises a sleeve 2 having an outer end 3 for engagement with a conduit of a trunking assembly. An inner end 4 of the sleeve 2 terminates in an enlarged hollow end portion 5 comprising an intermediate funnel portion 6 and an outer cylindrical housing 7. An open end 12 of the cylindrical housing 7 is closed and sealed by a removable cylindrical end plate 8. A number of spaced-apart glands 9 are mounted on the end plate 8 for reception and through passage of cables 10. In accordance with the present invention, the transmission cable outlet device 1 of the invention has an end plate 8 with each gland 9 mounted on an inside face 23 of the end plate 8. It will be noted that with this construction, each gland 9 is housed within the enlarged hollow end portion 5 when the end plate 8 is engaged with the open end 12 of the enlarged hollow end portion 5. Thus, advantageously, all of the glands 9 are housed and sealed within the enlarged hollow end portion 5 of the transmission cable outlet device 1 in use.

An O-ring seal 29 sits within a complementary circumferential groove 36 in the end plate 8 to seal between the end plate 8 and a bore of the cylindrical housing 7.

A number of cable through-passage locations are indicated at an outer face 25 of the end plate 8. In this case, the cable through-passage locations are indicated by through-holes 26 which extend through the end plate 8. These through-holes 26 may be sized to receive a particular cable 10 size or different cable 10 sizes. Alternatively, they may simply be through holes 26 of relatively small diameter to indicate the location for through passage of a cable 10, which through-hole 26 can be bored out to the required cable size before delivering cables 10 through the transmission cable outlet device 1.

Each through-hole 26 extends through a flanged outer end 27 of the end plate 8 and communicates with an enlarged gland receiving socket 28 in a cylindrical body 31 of the end plate 8. A bore of each gland receiving socket 28 is threaded to receive a threaded inner end 30 of a gland 9.

A cable 10 passes through the hole 26 and centrally through a bore 32 of the gland 9 and out through a threaded cap 34 of the gland 9 which causes an internal threaded nose of the gland 9 to grip and seal against an outer surface of the cable 10.

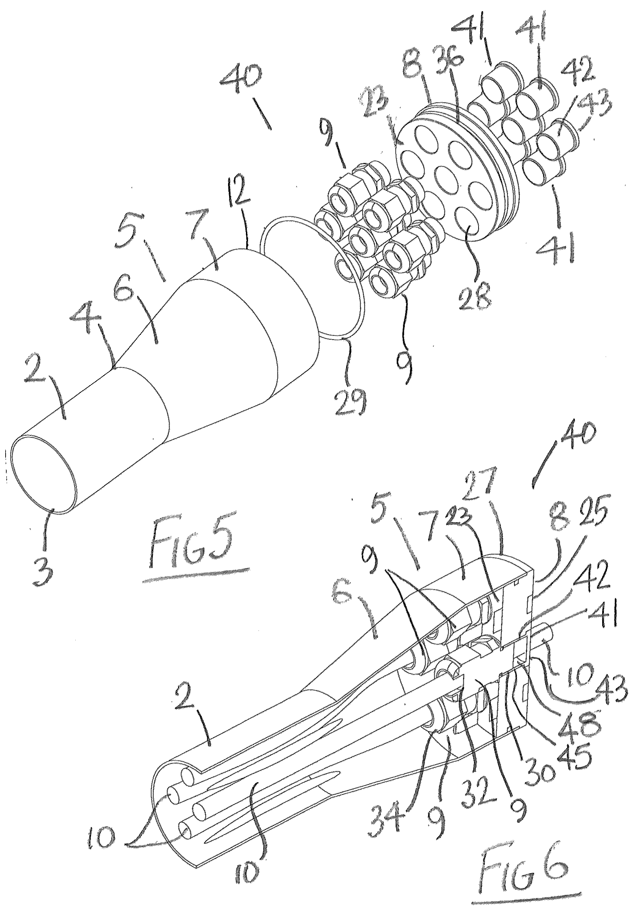

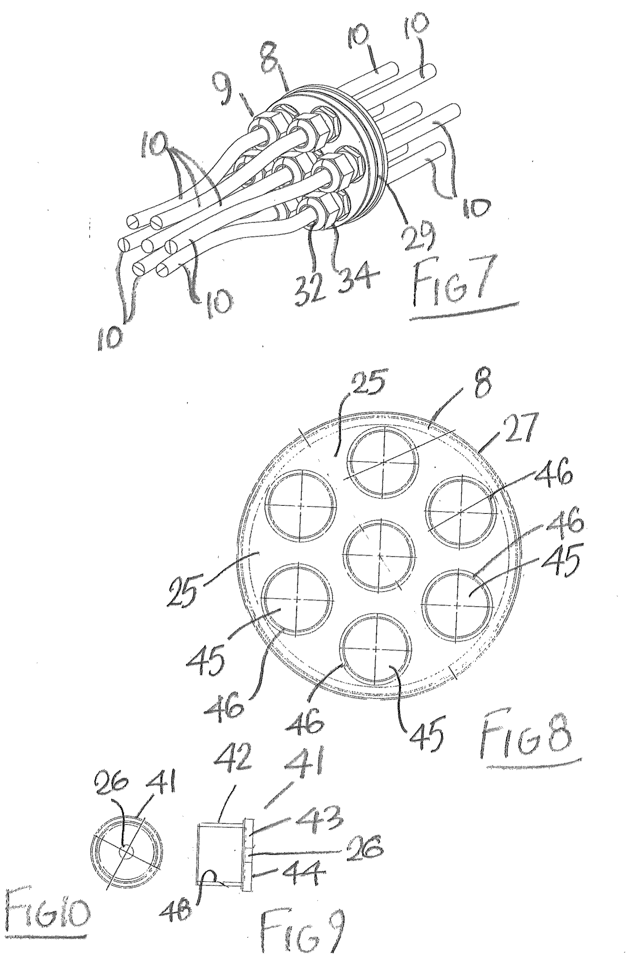

Referring now to Fig. 5 to Fig. 10, there is illustrated another transmission cable outlet device according to a second embodiment of the invention, indicated generally by the reference numeral 40. Parts similar to those described previously are assigned the same reference numerals. In this case, a number of cable guide inserts 41 are mounted on the end plate 8, each cable guide insert 41 comprising a cylindrical tubular sleeve 42 with a flanged end 43. Each sleeve 42 is demountably engagable within a complementary opening 45 in the end plate 8. An annular recess 46 is provided in the end plate 8 at an outer end of each opening 45 at an outer face 25 of the end plate 8 for reception of the flanged end 43 of the cable guide insert 41. Thus, an outer face 44 of the cable guide insert 41 is flush with the outer face 25 of the end plate 8 when the cable guide insert 41 is mounted on the end plate 8.

A bore 48 of the tubular sleeve 42 is threaded for complementary inter-engagement with, and reception of, the threaded inner end 30 of the gland 9. Thus, when a gland 9 is mounted on the inside face 23 of the end plate 8, it engages within the bore 48 of the tubular sleeve 42 and pulls the cable guide insert 41 inwardly into the opening 45 and firmly anchors the cable guide insert 41 on the end plate 8.

In this case, the through hole 26 indicating the position for through passage of a cable 10 is centrally located on the flanged end 43 of the cable guide insert 41 to correctly position a cable 10 for passage through an associated gland 9 mounted on the inside face 23 of the end plate 8 of the cable guide insert 41 and engaging within the associated cable guide insert 41.

Conveniently, if required, cable guide inserts 41 with different diameter holes 26 may be provided to accommodate cables 10 of different outer diameter on the end plate 8. The cable guide inserts 41 allow the end plate 8 to be modified and changed, if required, to accommodate cables 10 of different outer diameter.

It will be noted that instead of providing cable through holes 26 in the end plate 8 or insert 41, marks or indentations may be provided on the end plate 8 or insert 41 as drilling guides to facilitate drilling through holes 26 of the required diameter for through passage of selected cables 10.

The terms "comprise" and "include", and any variations thereof required for grammatical reasons, are to be considered as interchangeable and accorded the widest possible interpretation.

The invention is not limited to the embodiments hereinbefore described but may be varied in both construction and detail within the scope of the appended claims.

## Claims

1. A transmission cable outlet device (1) for use in a trunking assembly for transmission cables (10), comprising a sleeve (2) having an outer end (3) for engagement with a conduit of the trunking assembly, the sleeve (2) having an inner end (4) terminating in an enlarged hollow end portion (5) having an open end (12) closed and sealed by a removable end plate (8), at least one gland (9) mounted on the end plate (8) for reception and through passage of a cable (10), **characterised in that** the or each gland (9) is mounted on an inside face (23) of the end plate (8) such that the or each gland (9) is housed within the enlarged hollow end portion (5) when the end plate (8) is engaged with the open end (12) of the enlarged hollow end portion (5).

2. The transmission cable outlet device (1) as claimed in claim 1, wherein at least one cable through-passage location (26) is indicated at an outer face (25) of the end plate (8).

3. The transmission cable outlet device (1) as claimed in claim 2, wherein the cable through-passage location is indicated by a mark or indentation in the outer face (25) of the end plate (8).

4. The transmission cable outlet device (1) as claimed in claim 2, wherein the cable through-passage location is indicated by a through-hole (26) extending through the end plate (8).

5. The transmission cable outlet device (1) as claimed in claim 4, wherein a bore of the through-hole (26) corresponds to a standard cable (10) outer diameter.

6. The transmission cable outlet device (40) as claimed in any one of the preceding claims, wherein at least one cable guide insert (41) is mounted on the end plate (8), the cable guide insert (41) comprising a tubular sleeve (42) with a flanged end (43), the sleeve (42) being demountably engagable within a complementary opening (45) in the end plate (8).

7. The transmission cable outlet device (40) as claimed in claim 6, wherein an annular recess (46) is provided in the end plate (8) for reception of the flanged end (43) of the cable guide insert (41).

8. The transmission cable outlet device (40) as claimed in claim 6 or claim 7, wherein a bore (48) of the sleeve (42) is threaded for reception of a gland (9).

9. The transmission cable outlet device (40) as claimed in any one of claims 6 to 8, wherein a cable through-passage location (26) is centrally indicated at an outer face (44) of the flanged end (43) of the cable guide insert (41).

10. The transmission cable outlet device (40) as claimed in claim 9, wherein the cable through-passage location is indicated by a mark or indentation in the outer face (44) of the flanged end (43) of the cable guide insert (41).

11. The transmission cable outlet device (40) as claimed in claim 9, wherein the cable through-passage location is indicated by a through-hole (26) extending centrally through the flanged end (43) of the cable guide insert (41).

12. The transmission cable outlet device (40) as claimed in claim 11, wherein a bore of the through-hole (26) corresponds to a standard cable (10) outer diameter.
